(19) Europäisches Patentamt
European Patent Office
Office européen des brevets

(11) **EP 3 839 877 B1**

(12) **EUROPEAN PATENT SPECIFICATION**

(45) Date of publication and mention of the grant of the patent:
**07.09.2022 Bulletin 2022/36**

(21) Application number: **19315164.4**

(22) Date of filing: **19.12.2019**

(51) International Patent Classification (IPC):
*G06T 5/00* (2006.01)        *H04N 5/217* (2011.01)
*H04N 5/367* (2011.01)        *H04N 5/232* (2006.01)

(52) Cooperative Patent Classification (CPC):
**G06T 5/005; H04N 5/2171; H04N 5/23245; H04N 5/367; H04N 5/3675**

(54) **METHOD AND SYSTEM FOR PROCESSING ARTIFACTS ON DIGITAL IMAGES**

VERFAHREN UND SYSTEM ZUR VERARBEITUNG VON ARTEFAKTEN AUF DIGITALEN BILDERN

PROCÉDÉ ET SYSTÈME DE TRAITEMENT D'ARTÉFACTS SUR DES IMAGES NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.06.2021 Bulletin 2021/25**

(73) Proprietor: **Meero SAS**
**75002 Paris (FR)**

(72) Inventors:
• **Ocampo, Cristian**
  **75002 Paris (FR)**
• **Vaulet, Paola**
  **75002 Paris (FR)**

(74) Representative: **BCF Global**
**Centre d'Entreprise et d'Innovation**
**56, Bd Niels Bohr**
**CS 52132**
**69603 Villeurbanne Cedex (FR)**

(56) References cited:
**EP-A1- 0 585 759        US-A1- 2005 068 446
US-A1- 2008 317 378**

• **DIRIK A E ET AL: "Digital Single Lens Reflex Camera Identification From Traces of Sensor Dust", IEEE TRANSACTIONS ON INFORMATION FORENSICS AND SECURITY, IEEE, PISCATAWAY, NJ, US, vol. 3, no. 3, 1 September 2008 (2008-09-01), pages 539-552, XP011328852, ISSN: 1556-6013, DOI: 10.1109/TIFS.2008.926987**

## Description

### FIELD

The present technology relates to the field of detection and correction of artifacts on digital images, more particularly of artifacts resulting from defaults or obstructing elements that affect the sensor through which the images are acquired.

### BACKGROUND

Unwanted artifacts may affect images acquired through a sensor. This may for example without limitation be the case with a sensor which is obstructed in part by dirt, dust or other particles, a faulty sensor, or a sensor whose lens or casing is itself damaged or cracked, or obstructed by dirt, dust, leaves or other elements. As used herein, "dust" will be used generically to represent any such particles or elements that may obstruct in part a sensor, without affecting the generality of the applicability of the teachings herein to dirt, leaves or other obstructing particles or elements.

As an example, the accumulation of dust particles on camera sensors provokes a substantial image quality loss, a situation not permitted in professional environments (e.g. fashion, luxury, wedding) where image aesthetics can mean losing or winning potential customers. This problem may occur when the camera sensor is exposed to non-sterile environments, especially when changing the camera lens. In practice, this problem is unavoidable as micro-particles can always enter the sensor when unprotected. After capturing an image, dust artifacts appear as small out-of-focus dark spots that become more visible at smaller aperture values. More precisely, they act as attenuation functions of the local incoming light. This attenuation can either be caused by absorption, as in the case of lens dust, or obstruction, as in the case of thin occluders.

Current approaches to correct the affected regions of an image include relying on manual image manipulation via commercial software, a tedious and time-consuming task. Other more sophisticated approaches perform the automated detection and removal of image artifacts by relying on several models that reproduce the effect of dust on the sensor. Various techniques are used for the detection, such as relying on intensity and shape features. Various other techniques are used for removal, such as recovering the information lying under corrupted regions, or considering the detection as a gap and filling it via interpolation algorithms. The common disadvantage among the above methods is the complexity of the dust models, which not only require information about the camera, but also cause the algorithm to be computationally complex. Because of the slow running times, these methods are confined to small-resolution images. A publication entitled "Digital Single Lens Reflex Camera Identifcation From Traces of Sensor Dust", IEEE Transactions on information forensics and security, vol.3, N°3, pp.539-552, dated 1 Septembrer 2008, discloses a source camera identification method based on detection and matching of dust-spot characteristics. Dust spots in the image are detected based on a (Gaussian) intensity loss model and shape properties. To prevent false detections, lens paramerter-dependent characteristics of dust spots are also taken into consideration.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

The present technology generally provides a method and associated system for detecting image affected regions and extracting region boundaries. The present technology also generally provides a method and associated system for correcting the affected regions in the images.

In one aspect of the present technology, an affected region is estimated using a dust model. In this first aspect, the aim is to assess whether a region of the image is blemished by dust. A first binary mask is created corresponding to the affected regions

In another aspect of the present technology, the estimation is refined and a second binary mask is created corresponding to the affected regions. The second binary mask distinguishes the pixels affected by dust around the affected region.

In yet another aspect of the present technology, the affected regions are corrected using a patch-based inpainting approach that relies on local and contextual information around the center of the affected region.

Claim 1 recites a method for processing artifacts on digital images. Embodiments are presented in dependent claims 2 to 8. Claim 9 recites a system executing program instructions for implementing the aforementioned method. Claim 10 recites a computer-readable medium for storing instructions to execute the aforementioned method. Claim 11 devises a camera comprising a computing system configured to execute instructions for, when in dust detection mode, process images according to the method of the claims 1 and 5, and when in normal shooting mode, process images according to the method of the claims 1 and 5 and any of the claims 6 to 8, or any of the claims 6 to 8, when respectively, a mask of artifact locations is not stored in the camera, or is stored in the camera.

The present technology allows high-resolution image processing in a matter of seconds without sacrificing image quality. Thus a clean version of a high-resolution image is restored in a very short computation time.

The present technology is agnostic to conditions of the image acquisition, for example without limitation, camera settings during image acquisition, and may be deployed even when the information of the conditions of image acquisition, such as camera configurations and settings, is unavailable during image post-processing.

In the context of the present description, unless expressly provided otherwise, a computing system may refer, but is not limited to, an "electronic device", an "operation system", a "system", a "computer-based system", a "controller unit", a "monitoring device", a "control device" and/or any combination thereof appropriate to the relevant task at hand.

In the context of the present description, unless expressly provided otherwise, the expression "computer-readable medium" and "memory" may include media of any nature and kind whatsoever depending on the technical requirements, nonlimiting examples of which include Random Access Memory (RAM), Read Only Memory (ROM), disks (CD-ROMs, DVDs, floppy disks, hard disk drives, etc.), USB keys, flash memory cards, solid state-drives, and tape drives. Still in the context of the present description, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

For a better understanding of the present technology, as well as other aspects and further features thereof, reference is made to the following description which is to be used in conjunction with the accompanying drawings, where:

Figure 1 depicts a method that is used in the present technology for dust detection;
Figure 2 depicts a method that may be used in the present technology for boundary extraction of dust detected on image;
Figure 3 illustrates the application of the present technology (dust detection and boundary extraction) on image;
Figure 4 depicts a method that may be used in the present technology for removal of dust detected on image;
Figure 5 depicts a computing system that may be used to implement the methods of the present technology; and
Figure 6 depicts a method that is used for integrating the present technology in a camera.

## DETAILED DESCRIPTION

The examples and conditional language recited herein are principally intended to aid the reader in understanding the principles of the present technology and not to limit its scope to such specifically recited examples and conditions.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). Moreover, explicit use of the term "processor" should not be construed to refer exclusively to hardware capable of executing software, and may implicitly include, without limitation, application specific integrated circuit (ASIC), field programmable gate array (FPGA), ROM for storing software, RAM, and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

While the following description is made in relation to images acquired through a camera sensor, it will be apparent to the person skilled in the art that the teachings herein may be applied to digital images acquired through sensors of apparatus other than cameras.

For a given set of images $S = \{ S_i, i \in [1, N]\}$, with $N \geq 2$ captured with a dirty camera sensor, the developers produce through the present technology a clean version $\hat{I}$ of any desired image I (captured by the corrupted sensor) by following a detection and removal approach, as follows:

$$\hat{I} = f\{I, \Phi_\theta(x)\}$$

where $\Phi$ (with parameters $\theta$) is a function that returns the likelihood that a patch centered at pixel x is affected by dust in S, and f is a function that cleans the image I over corrupted regions. A "patch" as used herein means a small subwindow (normally squared) corresponding to the ensemble of consecutive pixels located around a determined location within the image.

In order to define the function $\Phi$, and to account for the fact recognized by the developers of the present technology, that camera configurations and settings may be unavailable during image post-processing, a few assumptions may be made.

As an example, the following assumptions may be made:

- a first assumption is that particles deposited in front of the sensor block a portion (proportional to their size) of the incoming light and hence appear as dark spots on the images;

- a second assumption comes from the observation that particles located on an out-of-focus plane, have a blurry projection on the image plane. Indeed, their projection depends on the optical properties of the camera and more specifically, their scale is inversely proportional to the f-number settings or camera aperture; and

- a third assumption is that particles adhere to an elliptic shape, so that a 2D Gaussian may be used to reproduce the dust particles.

The person skilled in the art will recognize that different or additional assumptions may be made, and will know, based on an understanding of how artifacts corrupt the image information depending on the characteristics of a given sensor, how to devise such assumptions. So that the generality of the teaching of the present disclosure is not affected or limited by the example of assumptions made in the description herein.

**Dust detection**

The present technology generally consists in an identification of attributes that are persistent throughout the set of images S, taking advantage of the fact that, since the camera sensor is corrupted at fixed positions, the acquired images will all present artifacts at the same spatial locations. Such attributes allow to define the likelihood Φ that any region is potentially affected by dust. At this stage thus, potentially dirty regions are localized.

The interaction between shape and color attributes is used to compute Φ. Since The estimator Φ responds proportionally to the amount of dust, a threshold τ is defined to retain only the meaningful contributions. Thus D may be defined as the function that outputs binary values for pixels potentially affected by dust:

$$D(x) = \Phi_\theta(x) \geq \tau$$

Developers of the present technology have recognized that dust appears as circular spots darker than their surroundings. Under that basis, they have sought an intensity value that separates dust from background on small corrupted patches.

The content of every possible patch of fixed size in the image is scanned by identifying the pixel intensity threshold $\mu_{db}$ (for each patch) that separates two underlying patch structures, background or dust.

The amount of pixels that are concentrated around the center of the patch and whose intensity is smaller and greater than $\mu_{db}$, for dust d and background b respectively, is then computed:

$$d(x) = \sum_{-p}^{p} 1_{\{I(x+p)<\mu_{db} \ \& \ |p|<r\}} \ ,$$

$$b(x) = \sum_{-p}^{p} 1_{\{I(x+p)\geq\mu_{db} \ \& \ |p|\geq r\}} \ ,$$

where p is an index used to traverse each position of the patch centered at x, and r is the radius of the candidate dust.

Both quantities, d(x) and b(x), are used to measure the ratio of pixels located at the center of the patch and to obtain the response $\Phi$:

$$\phi\{I\}(x) = \frac{d(x)}{d(x)+b(x)} \ .$$

The response $\phi$ is aggregated on multiple scales of the images. This allows to render the detection robust to dust spots of different dimensions.

The images are downsampled so that the larger dimension may be δ ∈ {800, 400, 200}px. The final detection is the aggregate of the meaningful contributions at each scale:

$$\Phi(x) = \sum_{i}^{N} \sum_{s} \phi\{S_i^\delta\}(x)_{\{\phi(x)>\rho\}}$$

where only $\phi$(x) responses larger than p are combined , ie ignoring values that are smaller than p, so as to avoid possible false detections of structures that resemble dust but are not.

The person skilled in the art will recognize that different or additional dimension values may be considered as the dimension of the downsampled images, and that these dimensions may be chosen depending on the initial size of the image, and/or so as to render the detection more sensitive to spots of various sizes, ie large values (like 800) will target fine spots, whereas small values (200) will allow the detection of large spots. So that the generality of the teaching of the present disclosure is not affected or limited by the exemplary larger dimension values disclosed in the description herein.

A condition is incorporated by checking how large the difference is between the intensity associated with the dust regions (average intensity of pixels located within Ipl < r) and the one associated with the background (average intensity of pixels located outside Ipl ≥ r). In case those intensities are similar, it can be inferred that a region is almost flat which should be ignored, otherwise introducing uncertainty. This allows to reject false detections by avoiding the inspection on significantly flat regions.

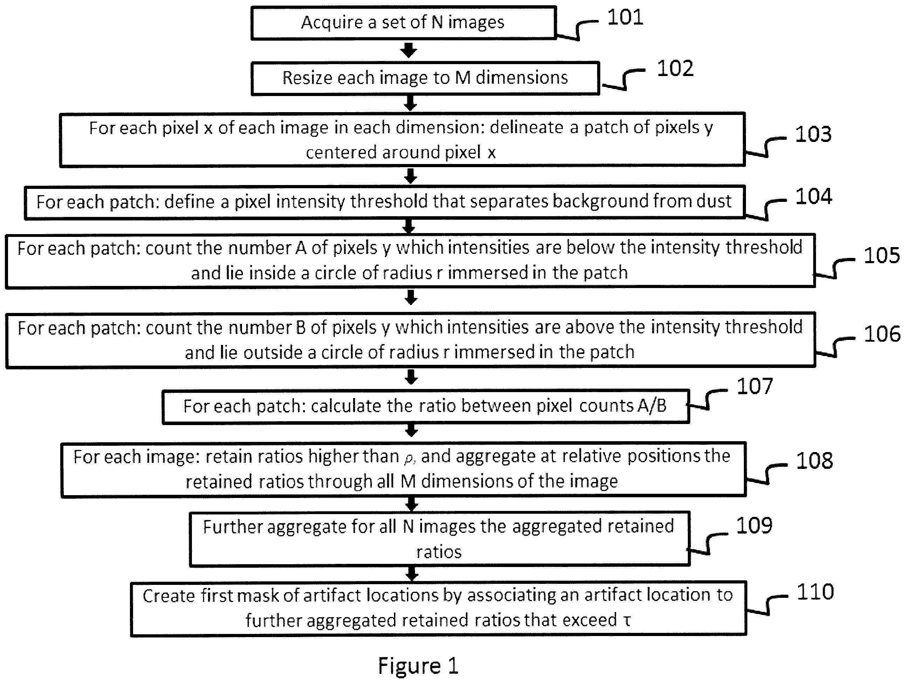

Figure 1 depicts a method that is used in the present technology for image dust detection. At step 101, a set of N (N ≥ 2) images is acquired, taken by a camera or other sensor. Each such image from the set of N is resized at step 102 into images of M different dimensions (M ≥ 2). For each pixel x of each such image in the set of N in each such dimension among M, at step 103 a patch is delineated as a set of pixels y centered around the pixel x. For each patch thus extracted, a number of steps are taken:

- at step 104, a pixel intensity threshold is defined that separates a background area from a dust area;
- at step 105, the number of pixels y both lying inside a virtual circle immersed in the patch, centered on x and with a radius of parameter r, and with an intensity that is below the pixel intensity threshold, is counted;
- at step 106, the number of pixels y both lying outside the same virtual circle, and with an intensity that is above the pixel intensity threshold, is counted; and
- at step 107, the ratio is calculated between pixel count obtained at step 105, and pixel count obtained at step 106.

From the preceding steps, are obtained as many ratios as the number of pixels x. Of these ratios, only the ones higher than a parameter p are retained. For each image in the set of N images, at step 108 the retained ratios are aggregated through all M dimensions. Since the M resized images have different dimensions, a pixel by pixel aggregation is not possible. Therefore, the aggregation is done at relative positions within the M resized images. The person skilled in the art will recognize that to achieve the aggregation at relative positions, different options may be available, for example resizing the M images to the original image dimension, then aggregating the retained ratios. Then, at step 109, the aggregated retained ratios are further aggregated for all images in the set of N. A first mask of artifact locations is created at step 110 by thresholding the further aggregate of aggregated retained ratios to a parameter $\tau$, ie: associating an artifact location to the further aggregate of aggregated retained ratios that exceed $\tau$. The first mask thus consists in an image with binary pixels that are activated/set to one if such pixels in the set of N acquired images are possibly affected by dust. In this first step of dust detection, these affected pixels point to a rough shape and approximate location of image artifacts.

The values for parameters r, p and $\tau$ may be determined through different optimization techniques, in such a way that the detection is more accurate to dust while rejecting false detections. In embodiments, the following ranges of parameter values have been retained by the developers of the present technology: $r \in [0.1, 5]$, $p \in [0.1, 0.8]$ and $\tau \in [0.2, 0.7]$. An optimization technique may be, without limitation, a genetic algorithm. Such an algorithm aims to maximize a score function based on the accuracy of detection. It may consist in the creation of multiple sets of random parameters, testing, selecting, and replicating each set by crossover and mutation for a new generation. For initialization, 50 random uniformly distributed triples of parameters could be used, sampled from the aforementioned range of values. Subsequent generations could be created with crossover or mutation operations on random pairs by using the parameters associated with the 50% best scores. For crossover a probability of $p_c = 0.5$ could be used on each parameter, and for mutation a probability of $P_m = 0.05$. In embodiments, the following parameter values were retained by the developers of the present technology: r = 2.4, p = 0.295, and $\tau$ = 0.485.

## Boundary extraction

At this stage, the aim is for the present technology to precisely localize the pixels affected by dust. To that aim, generally, the neighboring pixels within a subwindow centered around a detected dust region are analyzed. As used herein, a "subwindow" refers to an image portion that fully encloses a detected dust artifact; a subwindow may be substantially larger than a patch.

For such subwindows, the developers of the present technology have realized, through the understanding that central pixels are darker than their surroundings, that it may be assumed that the average intensity of the subwindow is a good estimator to define the transition between background and dust. Thresholding the subwindow with such average intensity produces an initial identification of dust locations. Because the shape of dust is preserved throughout images captured with a camera at constant settings, the combination of the individual responses offers a better approximation of the boundaries:

$$\varphi = \sum_{i}^{N} (P_i < \mu_i) \cdot w_{var}^{i}$$

where $P_i$ is a subwindow extracted around the detected spot from the grayscale version of image $S_i$, and $\mu_i$ its corre-

sponding average intensity. Through $w^i_{var}$ is rejected the input from subwindows whose local variation is very high, therefore, excluding highly textured regions or strong discontinuities like edges:

$$w^i_{var} = \exp\left(-\frac{\sigma_i^2}{2\sigma_{var}^2}\right)$$

where $\sigma_i$ is the standard deviation of $P_i$, and $\sigma_{var}$ is a user-defined parameter that allows to control the maximum allowed amount of variability within $P_i$.

To further prevent false responses within $\phi$, pixels that are located away from the center and whose response greatly differs from that of the center are penalized:

$$\Phi(y) = \varphi(y) \cdot \underbrace{\exp\left(\frac{-(\varphi(y)-\varphi(y_o))^2}{2\sigma_c^2}\right)}_{W_{color}} \cdot \underbrace{\exp\left(\frac{-y^2}{2\sigma_s^2}\right)}_{W_{space}} :$$

where y spans the spatial domain of the subwindow, $W_{color}$ is an exponential weight that is close to one for $\varphi$ values similar to the response at the central region, $W_{space}$ is a Gaussian kernel and yo the central pixel of the subwindow. The result of this operation is to have larger responses over the regions that belong to dust.

Finally, Otsu's method is used to binarize the response:

$$B = \Phi > \tau_{otsu}$$

where B is the binary subwindow with '1' only on the regions affected by dust and $\tau_{otsu}$ is the threshold obtained by Otsu's method to discriminate between dust and background.

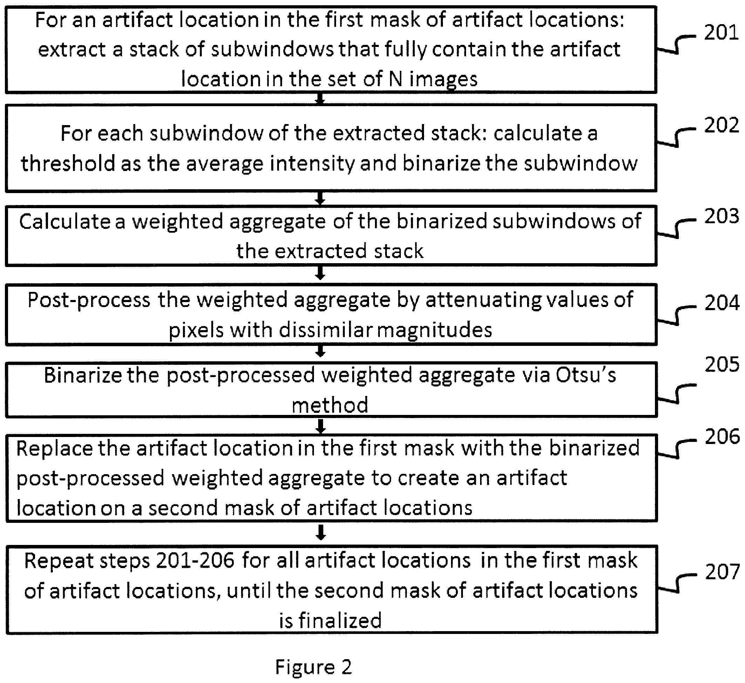

Figure 2 depicts a method that may be used in the present technology for boundary extraction of dust detected on image. At step 201, each artifact location present in the first mask of artifact locations such as, without limitation, the one created at step 110 (Figure 1) is being processed in turn. For all images in the set of N, a stack of subwindows is extracted, large enough for the artifact location to be fully included in each subwindow. At step 202, each subwindow in the stack is being processed in turn: a threshold is calculated as the average intensity for the subwindow, that allows to binarize the colors within the subwindow. At step 203, after step 202 is repeated for all subwindows in the stack, a weighted aggregate of the binary responses is calculated. The weighting as mentioned above may be inversely related to the variance of each subwindow, ie: for subwindows with a large variance, the weights are small, and their contribution to the aggregation is small.

At step 204, the weighted aggregate is post-processed by attenuating responses with dissimilar magnitude, ie: based on the recognition by the developers of the present technology that intensities closer to the center of subwindows are more likely to be associated with an artifact, and those away from the center not, by attenuating values of pixels that lie away from the center of the subwindows, and whose values are different from the values of pixels at the center of the subwindows.

At step 205 the post-processed response is binarized using Otsu's method. Each artifact thus processed at steps 201-205 is incorporated at step 206 in a second mask. At step 207, steps 201-206 are repeated for all artifacts present in the first mask of artifact locations, until the second mask of artifact locations is finalized. The second mask thus consists in an image with binary pixels that are activated/set to one if such pixels in the set of N acquired images are likely affected by dust. In this second step of boundary extraction, these affected pixels point to a precise and accurate shape and location of image artifacts.

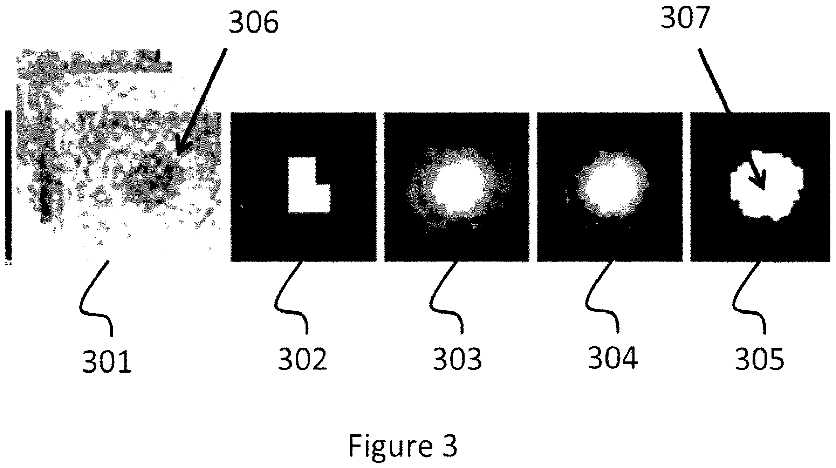

Figure 3 illustrates the application of the present technology (dust detection and boundary extraction) on image. A set of N subwindows 301 are to be analyzed, which all present, for the sake of illustration, a dust spot 306. Dust detection according to the present technology allows to obtain a first mask 302 where a rough shape (in the form of an L on Figure 3) points to the approximate location of the artifacts in the subwindows. Pixels within the subwindows 301 that lie under the approximate location of the artifact are binarized and aggregated, resulting in the image 303. Image 303 is further processed and transformed into image 304 by applying a weighting, such as the bilateral filter. A second mask 305 is obtained with precise artifact boundaries 307.

The dust detection and boundary extraction methods disclosed above may be advantageously combined with the artifact removal method disclosed below. However, the person skilled in the art will appreciate that other artifact removal and inpainting methods may be used, and that the dust detection and boundary extraction methods in themselves present technical merits in relation to recognizing dust and ignoring potential perturbations, in particular through an approach used to assess dust by disregarding lower responses and by adding the boundary extraction stage.

**Artifact removal**

Once the regions affected by dust have been precisely defined, an artifact-free image may be recovered using aspects of the present technology. To that effect, the content under the partial opaque area and the local information around the region highlighted by the estimated binary mask (as second mask) are relied upon. An aspect of the present technology is to replace each pixel within the distorted areas by using neighbouring (hence clean) information (patches). Clean patches are used to replace patches corrupted by dust. The removal is performed in an ordered and recursive manner to allow for a coherent reconstruction. In particular, according to the present technology, the partially unaffected patches on the borders are relied upon, and similar patches within a search space $\Omega_r$ as a rectangular container of contiguous pixels, larger than a patch, around the affected region are looked for.

Assuming $I$ to be the image affected by dust, $M$ the second mask containing the locations of artifacts, and the patches $P_k$ and $P_l$ centered at pixels $k$ and $l$ within image $I$, respectively. It is to be noted that $k \in \Omega_{dust}$ (with $M(k) = 1$) and $l \in \Omega_r$ with $\Omega_r$ the domain of a search window extracted from I, around the center of the current dust spot. Patches that are partially or completely masked are excluded from the search. In other words, to replace corrupted regions, only candidate patches that are completely outside the dust regions are taken. That is, those that are not labelled as artifact on the second mask.

As mentioned earlier, dust spots are not completely dark and some background information can still be utilized from the corrupted pixels. In an aspect of the present technology, the following similarity measure is defined so as to preserve structural coherence and details around textured regions:

$$D(P_k, P_l) = \sum_{-p}^{p} |P_k(p) - P_l(p)| \cdot (1 - m_k(p)) + \lambda |\nabla P_k(p) - \nabla P_l(p)| \, ,$$

<div align="center">Equation 1</div>

where $p$ spans the domain of the patches, $mk$ is a binary patch extracted from the second mask M and $\nabla$ is the gradient operator. As can be noted, the similarity measure relies on gradient information from the masked areas, hence improving structural coherence of the reconstruction.

Patch-based reconstruction in an aspect of the present technology, may be optimized through the use of the optimized video processing framework Video++, known to the person skilled in the art. For example: Matthieu Garrigues and Antoine Manzanera: "Video++, a modern image and video processing c++ framework", in Proc. 2014 Conference on Design and Architectures for Signal and Image Processing (DASIP), pages 1-6. IEEE, 2014. this technology allows to provide an extensive search and retrieve the exact nearest neighbour match within $\Omega_r$.

Two additional optimization techniques may be incorporated to achieve further speed-up on images of several megapixels with thousands of pixels to inpaint. That is, by taking advantage of the lowly varying nature of the images (around dust spots) and the relatively small size of the dust spots, multiple pixels are inpainted at a time. Particularly, the full size of the best patch is used to progressively fill the gap. In addition, the extensive search is performed on a subset that properly covers the spatial domain of $\Omega_r$.

Two modifications may be added to Equation 1 above to further preserve structural coherence on complex cases, e.g. dust falling on highly textured regions and dark dust spots with strong gradients. Regarding the first case, highly textured areas need a stronger structural preservation, therefore a combination of gradient and radiometric information (from the affected pixels) is used to assess similarity. As for the second case, the magnitude of the gradients on dust spots with strong edges is attenuated. This is because very dark spots contain strong gradients at their edges, that provoke the similarity assessment to be misguided.

Both extensions are incorporated as follows:

$$D(P_k, P_l) = \begin{cases} |P_k - P_l| \cdot ((1 - m_k) + m_k \cdot 0.25) + \lambda |\kappa \cdot \nabla P_k - \nabla P_l| & \text{if } \sigma_{spot} \geq \tau_{md} \\ |P_k - P_l| \cdot (1 - m_k) + \lambda |\kappa \cdot \nabla P_k - \nabla P_l| & \text{otherwise} \end{cases}$$

where $\sigma_{spot}$ is the variance of the estimated region affected by dust, $\tau_{md}$ is a threshold that allows to distinguish between flat and textured regions, and $\kappa$ is a scaling factor that reduces the magnitude of the gradient depending on the variability of the content around dust.

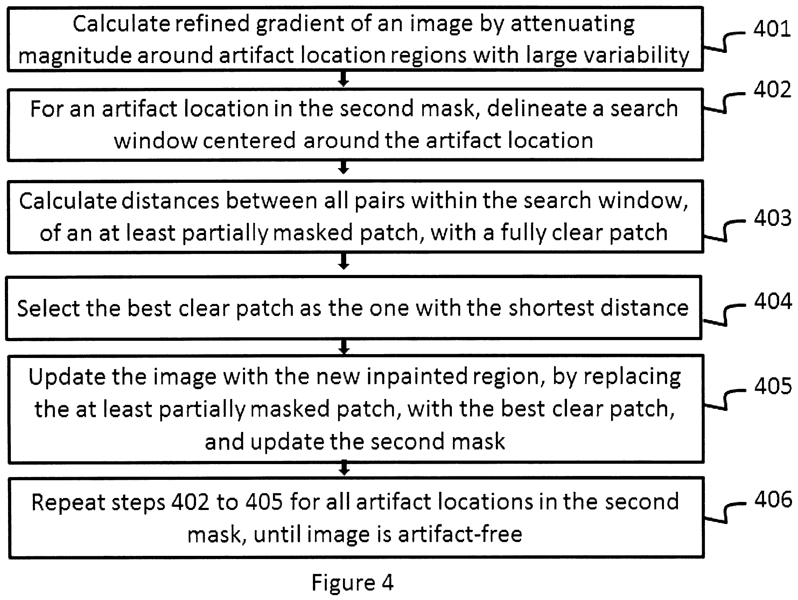

Figure 4 depicts a method that may be used in the present technology for removal of artifact as a result of dust detected on an image. An image is to be processed to turn into an artifact-free image. At step 401, a refined gradient of this image is calculated by attenuating its magnitude around artifact regions with large variability. Then, each artifact location in a second mask of artifact locations, such as, without limitation, the second mask obtained at step 207 (Figure 2), is processed in turn per steps 402 to 406. The artifact location defines an area to inpaint in the processed image. A search window centered around the artifact location is defined at step 402. In that search window, some patches are partially or completely overlapping the artifact location in the second mask, others are completely clear of the artifact location. Patches that are partially or completely overlapping are replaced by patches that are completely clear. For a given patch that is partially or completely overlapping, the selection of the completely clear replacement patch is operated based on a similarity measure between the two patches, as a distance between them.

The similarity measure that is used to compare patches may be affected by the variance of the artifact location, and certain characteristics of the area may be taken into account when calculating the distance. For example, as stated above, texture or gradient of the area. The person skilled in the art will recognize that other characteristics of the artifact location may be accounted for when calculating the distance between patches. Actual distances are calculated, at step 403, between any patch at least partially overlapping the artifact location, and all patches in the search window that are fully clear (ie: not masked nor partially masked). At step 404, a best clear patch is selected as the one yielding the smallest distance among those distances calculated at step 403. At step 405, the selected best clear patch is used to update the image by replacing the partially masked patch with the selected best clear patch. In one embodiment, only a central part of the selected best clear patch may replace the central part of the partially masked patch. Further, the second mask, which is used as a guide to where to do the removal of artifacts from step 402 on, is updated to indicate (for example by setting the binary values to zero ) that an artifact and artifact location has already been processed. Step 406 indicates that steps 402 to 405 are repeated for all remaining artifact locations in the second mask of artifact locations until all artifact locations in the second mask have been processed, and the image is completely artifact-free.

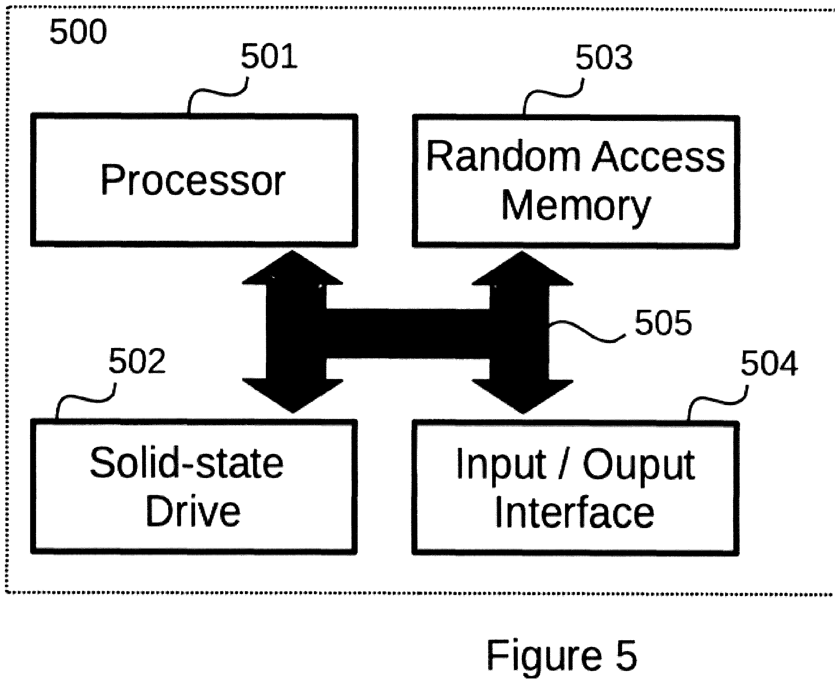

The process steps described above in relation to the present technology, including those depicted Figures 1, 2 and 4, may be implemented in a computing system, of which an example, without limitation, may be found in relation to Figure 5. As will be appreciated by the person skilled in the art, such computing system may be implemented in any other suitable hardware, software, and/or firmware, or a combination thereof, may be a single physical entity, or several separate physical entities with a distributed functionality, and may be integrated as part of a larger system with different functionalities, such as a camera or a sensor.

In some aspects of the present technology, the computing system 500 may comprise various hardware components including one or more single or multi-core processors collectively represented by a processor 501, a solid-state drive 502, a memory 503 and an input/output interface 504. In some aspects, the computing system 500 may also be a subsystem of one of the above-listed systems. In some other aspects, the computing system 500 may be an "off the shelf' generic computing system. In some aspects, the computing system 500 may also be distributed amongst multiple systems. The computing system 500 may also be specifically dedicated to the implementation of the present technology. As a person in the art of the present technology may appreciate, multiple variations as to how the computing system 500 is implemented may be envisioned without departing from the scope of the present technology.

Communication between the various components of the computing system 500 may be enabled by one or more internal and/or external buses 505 (e.g. a PCI bus, universal serial bus, IEEE 1394 "Firewire" bus, SCSI bus, Serial-ATA bus, ARINC bus, etc.), to which the various hardware components are electronically coupled.

The input/output interface 504 may allow enabling networking capabilities such as wire or wireless access. As an example, the input/output interface 504 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 502 stores program instructions, such as those part of, for example, a library, an application, etc. suitable for being loaded into the memory 503 and executed by the processor 501 for the process steps according to the present technology.

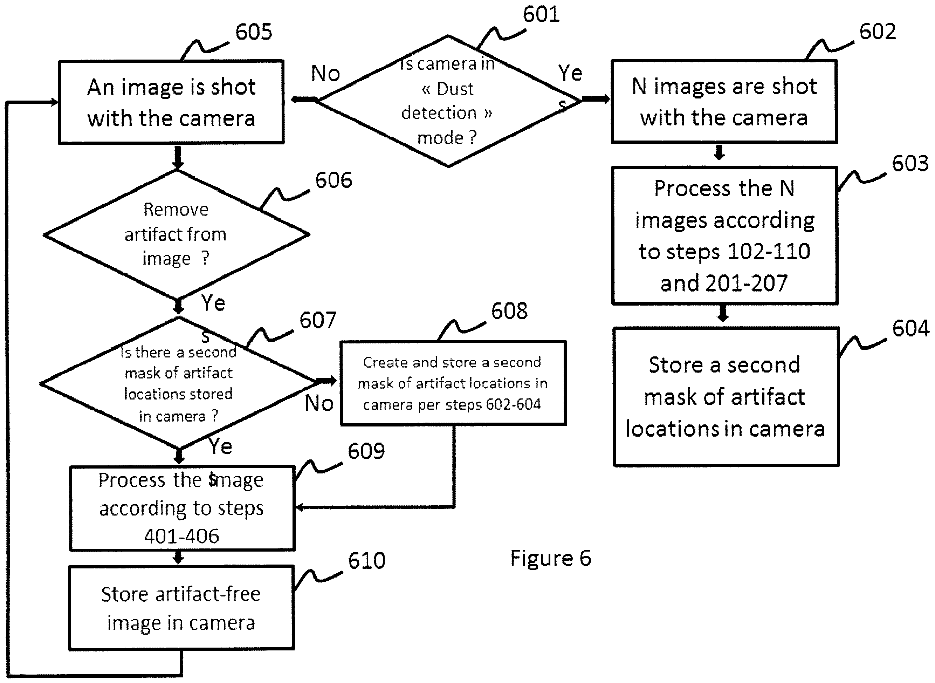

Figure 6 provides an example of a method according to the present technology that is implemented in a camera equipped with a computing system. Two modes are (601) in the camera: one as "Dust detection mode", the other one as "Normal shooting mode". When in "Dust detection mode", the camera allows a user to shoot (602) a set of N first images. The camera may then automatically process (603) the set of N first images according to steps 102-110 (Figure 1) then 201-207 (Figure 2). A second mask of artifact locations is thus be created, which is stored (604) in the camera.

When in "Normal shooting mode", the camera allows the user to shoot (605) a second image with the camera. At this point, an option may be offered to the user (606) to process the shot second image and make it artifact-free. If the option is exercised, the camera queries itself (607) whether it already has in storage a second mask of artifact locations. If not, the camera allows the user to create and store (608) a second mask of artifact locations by executing steps 602-604. When created and stored, the second mask of artifact locations is used by the camera to correct the second image by processing it (609) according to the steps 401-406 (Figure 4). An artifact-free second image is thus be created and stored (610) in the camera. The user may shoot another second image (605).

It should be expressly understood that not all technical effects mentioned herein need to be enjoyed in each and every embodiment of the present technology.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

**Claims**

1.  A method for processing artifacts on digital images comprising:

    - acquiring (101) a set of N, N ≥ 2, digital images through a sensor having an original dimension;
    - downsampling (102) each one of the acquired digital images into downsampled digital images of M different dimensions, M ≥ 2;
    - for each pixel x in each of the downsampled digital images, delineating (103) a first patch as a set of pixels y centered around pixel x;
    - for each delineated first patch:

        - calculating (104) a pixel intensity threshold that separates a background area from a dust area, the dust affecting the sensor;
        - counting (105) a number A of pixels y inside a circle with a radius of parameter r having an intensity that is below the pixel intensity threshold;
        - counting (106) a number B of pixels y lying outside the circle having an intensity that is above the pixel intensity threshold;
        - calculating (107) a ratio between A and B;

    - for each one of the downsampled digital images, retaining (108) ratios that are higher than a parameter p, resizing the downsampled digital images to the original dimension, and aggregating at each pixel position the retained ratios; and
    - creating (110) a first mask of artifact locations by associating an artifact location to each aggregated retained ratio that exceeds a parameter τ.

2.  The method of claim 1 in which the parameter r ∈ [0.1, 5].

3.  The method of claim 1 or 2, in which the parameter p ∈ [0.1, 0.8].

4.  The method of any of the claims 1 to 3, in which the parameter τ ∈ [0.2, 0.7].

5.  The method of any of the claims 1 to 4, further comprising for each artifact location in the first mask:

    - extracting (201) from the N acquired digital images a stack of subwindows that fully contain the artifact location;
    - for each subwindow in the extracted stack, calculating (202) an average intensity threshold, and binarizing the subwindow using the average intensity threshold;
    - for the extracted stack:

- calculating (203) a weighted aggregate of binarized subwindows of the extracted stack, by associating a weight that is inversely related to the variance of each binarized subwindow;
- post-processing the weighted aggregate of binarized subwindows of the extracted stack by attenuating (204) values that lie away from the center of the binarized subwindows, and whose values are different from the values at the center of the binarized subwindows;
- binarizing (205) the post-processed weighted aggregate of binarized subwindows via Otsu's method; and
- replacing (206) the artifact location in the first mask with the binarized post-processed weighted aggregate of binarized subwindows to create an artifact location on a second mask of artifact locations.

6. The method of claim 5, further comprising:

- acquiring a new digital image through the sensor;
- calculating (401) a refined gradient of the new digital image by attenuating magnitude around artifact locations in the second mask having a large variability;
- for each artifact location in the second mask, delineating (402) a search window around the artifact location, and for each delineated search window:

- delineating second patches as sets of pixels fully included in the delineated search window, and that are at least partially masked by the artifact location;
- delineating third patches as sets of pixels fully included in the delineated search window, and that are not masked by the artifact location;
- calculating (403) distances between all pairs of one of the second patches with one of the third patches;
- selecting (404) a best third patch in the digital image as the third patch among all pairs, having the shortest calculated distance; and
- updating (405) the new digital image by replacing the second patch, with the best third patch.

7. The method of claim 6 in which the distances are a similarity measure affected by the variance of the artifact location.

8. The method of claim 6 or 7, in which the updating the new digital image comprises replacing a central portion only of the second patch, with a central portion of the best third patch.

9. A system executing computer program instructions for implementing the method of any of the claims 1 to 8.

10. A computer-readable medium for storing instructions to execute the method of any of the claims 1 to 8.

11. A camera having at least two alternate modes, including a dust detection mode, and a normal shooting mode, comprising a computing system configured to execute instructions for:

- when in dust detection mode:

- allowing a user to shoot (602) a set of N first images with the camera;
- processing (603) the set of N first images according to the method of claims 1 and 5; and
- storing (604) in the camera a second mask of artifact locations;

- when in normal shooting mode:

- allowing the user to shoot (605) a second image with the camera; and
- allowing (606) to remove artifact from the second image, by:

- if the second mask of artifact locations is stored in the camera (607), processing (609) the second image according to the method of any of the claims 6 to 8, and storing (610) an artifact-free version of the second image in the camera; and
- if the second mask of artifact locations is not stored in the camera (607), allowing the user to shoot (602) a set of N first images with the camera, processing (603) the set of N first images according to the method of claims 1 and 5, and storing (604) in the camera a final second mask of artifact locations; and processing (609) the second image according to the method of any of the claims 6 to 8, and storing (610) an artifact-free version of the second image in the camera.

**Patentansprüche**

1. Verfahren zum Verarbeiten von Artefakten auf digitalen Bildern, umfassend:

   - Erfassen (101) eines Satzes von N, N ≥ 2, digitalen Bildern durch einen Sensor, der eine Originalabmessung aufweist;
   - Anpassen (102) jedes der erfassten digitalen Bilder durch Downsampling zu angepassten digitalen Bildern mit M unterschiedlichen Abmessungen, M ≥ 2;
   - für jedes Pixel x in jedem der angepassten digitalen Bilder, Abgrenzen (103) eines ersten Flächensegments als einen Satz von Pixeln y, der um das Pixel x zentriert ist;
   - für jedes abgegrenzte erste Flächensegment:

     - Berechnen (104) eines Pixelintensitätsschwellenwerts, der einen Hintergrundbereich von einem Staubbereich trennt, wobei der Staub den Sensor beeinträchtigt;
     - Zählen (105) einer Anzahl A von Pixeln y innerhalb eines Kreises mit einem Radius des Parameters r, die eine Intensität aufweist, die unter dem Pixelintensitätsschwellenwert liegt;
     - Zählen (106) einer Anzahl B von Pixeln y, die außerhalb des Kreises liegt und eine Intensität aufweist, die über dem Pixelintensitätsschwellenwert liegt;
     - Berechnen (107) eines Verhältnisses zwischen A und B;
     - für jedes der angepassten digitalen Bilder, Beibehalten (108) von Verhältnissen, die höher als ein Parameter p sind, Reskalieren der angepassten digitalen Bilder auf die Originalabmessung und Aggregieren der beibehaltenen Verhältnisse an jeder Pixelposition; und
     - Erstellen (110) einer ersten Maske von Artefaktorten durch Zuordnen eines Artefaktorts zu jedem aggregierten beibehaltenen Verhältnis, das einen Parameter τ überschreitet.

2. Verfahren nach Anspruch 1, bei dem der Parameter r ∈ [0,1, 5] .

3. Verfahren nach Anspruch 1 oder 2, bei dem der Parameter p ∈ [0,1, 0,8].

4. Verfahren nach einem der Ansprüche 1 bis 3, bei dem der Parameter τ ∈ [0,2, 0,7].

5. Verfahren nach einem der Ansprüche 1 bis 4, ferner umfassend für jeden Artefaktort in der ersten Maske:

   - Extrahieren (201) eines Stapels von Teilfenstern, die den Artefaktort vollständig enthalten, aus den N erfassten digitalen Bildern;
   - für jedes Teilfenster in dem extrahierten Stapel, Berechnen (202) eines durchschnittlichen Intensitätsschwellenwerts und Binarisieren des Teilfensters unter Verwendung des durchschnittlichen Intensitätsschwellenwerts;
   - für den extrahierten Stapel:

     - Berechnen (203) eines gewichteten Aggregats der binarisierten Teilfenster des extrahierten Stapels durch Zuordnen einer Gewichtung, die in umgekehrter Beziehung zu der Varianz des jeweiligen binarisierten Teilfensters steht;
     - Nachbearbeiten des gewichteten Aggregats der binarisierten Teilfenster des extrahierten Stapels durch Abschwächen (204) von Werten, die von der Mitte der binarisierten Teilfenster entfernt liegen und deren Werte sich von den Werten in der Mitte der binarisierten Teilfenster unterscheiden;
     - Binarisieren (205) des nachbearbeiteten, gewichteten Aggregats der binarisierten Teilfenster über das Verfahren von Otsu; und
     - Ersetzen (206) des Artefaktorts in der ersten Maske durch das binarisierte, nachbearbeitete, gewichtete Aggregat der binarisierten Teilfenster, um einen Artefaktort auf einer zweiten Maske von Artefaktorten zu erstellen.

6. Verfahren nach Anspruch 5, ferner umfassend:

   - Erfassen eines neuen digitalen Bildes durch den Sensor;
   - Berechnen (401) eines verfeinerten Gradienten des neuen digitalen Bildes durch Abschwächen der Größe um Artefaktorte in der zweiten Maske, die eine große Variabilität aufweisen;
   - für jeden Artefaktort in der zweiten Maske, Abgrenzen (402) eines Suchfensters um den Artefaktort, und für jedes abgegrenzte Suchfenster:

- Abgrenzen zweiter Flächensegmente als Sätze von Pixeln, die vollständig in dem abgegrenzten Suchfenster beinhaltet sind und die zumindest teilweise von dem Artefaktort überdeckt sind;
- Abgrenzen dritter Flächensegmente als Sätze von Pixeln, die vollständig in dem abgegrenzten Suchfenster beinhaltet sind und die nicht von dem Artefaktort überdeckt sind;
- Berechnen (403) von Abständen zwischen allen Paaren aus einem der zweiten Flächensegmente und einem der dritten Flächensegmente;
- Auswählen (404) eines besten dritten Flächensegments in dem digitalen Bild als das dritte Flächensegment aus allen Paaren, das den kürzesten berechneten Abstand aufweist; und
- Aktualisieren (405) des neuen digitalen Bildes durch Ersetzen des zweiten Flächensegments durch das beste dritte Flächensegment.

7.  Verfahren nach Anspruch 6, bei dem die Abstände ein Ähnlichkeitsmaß sind, das durch die Varianz des Artefaktorts beeinflusst wird.

8.  Verfahren nach Anspruch 6 oder 7, bei dem das Aktualisieren des neuen digitalen Bildes Ersetzen nur eines zentralen Abschnitts des zweiten Flächensegments durch einen zentralen Abschnitt des besten dritten Flächensegments umfasst.

9.  System, das Computerprogrammanweisungen zum Umsetzen des Verfahrens nach einem der Ansprüche 1 bis 8 ausführt.

10. Computerlesbares Medium zum Speichern von Anweisungen zum Ausführen des Verfahrens nach einem der Ansprüche 1 bis 8.

11. Kamera, die mindestens zwei alternative Modi aufweist, einschließlich eines Stauberkennungsmodus und eines normalen Aufnahmemodus, und ein Computersystem umfasst, das dazu konfiguriert ist, Anweisungen für Folgendes auszuführen:

- in dem Stauberkennungsmodus:
- Ermöglichen, dass ein Benutzer einen Satz von N ersten Bildern mit der Kamera aufnimmt (602);
- Verarbeiten (603) des Satzes von N ersten Bildern gemäß dem Verfahren nach den Ansprüchen 1 und 5; und
- Speichern (604) einer zweiten Maske von Artefaktorten in der Kamera;
- in dem normalen Aufnahmemodus:

- Ermöglichen, dass der Benutzer ein zweites Bild mit der Kamera aufnimmt (605); und
- Ermöglichen (606), dass ein Artefakt aus dem zweiten Bild entfernt wird, durch:
- wenn die zweite Maske von Artefaktorten in der Kamera gespeichert ist (607), Verarbeiten (609) des zweiten Bildes gemäß dem Verfahren nach einem der Ansprüche 6 bis 8 und Speichern (610) einer artefaktfreien Version des zweiten Bildes in der Kamera; und
- wenn die zweite Maske von Artefaktorten nicht in der Kamera gespeichert ist (607), Ermöglichen, dass der Benutzer einen Satz von N ersten Bildern mit der Kamera aufnimmt (602), Verarbeiten (603) des Satzes von N ersten Bildern gemäß dem Verfahren nach den Ansprüchen 1 und 5, und Speichern (604) einer endgültigen zweiten Maske von Artefaktorten in der Kamera; und Verarbeiten (609) des zweiten Bildes gemäß dem Verfahren nach einem der Ansprüche 6 bis 8 und Speichern (610) einer artefaktfreien Version des zweiten Bildes in der Kamera.

**Revendications**

1.  Procédé de traitement d'artéfacts sur des images numériques comprenant :

- l'acquisition (101) d'un ensemble de N images numériques, N ≥ 2, par l'intermédiaire d'un capteur ayant une dimension d'origine ;
- le sous-échantillonnage (102) de chacune des images numériques acquises en images numériques sous-échantillonnées de M dimensions différentes, M ≥ 2 ;
- pour chaque pixel x dans chacune des images numériques sous-échantillonnées, la délimitation (103) d'un premier patch sous la forme d'un ensemble de pixels y centré autour du pixel x ;
- pour chaque premier patch délimité :

- le calcul (104) d'un seuil d'intensité de pixel qui sépare une zone d'arrière-plan d'une zone de poussière, la poussière affectant le capteur ;
- la comptabilisation (105) d'un nombre A de pixels y à l'intérieur d'un cercle avec un rayon de paramètre r ayant une intensité qui est inférieure au seuil d'intensité de pixel ;
- la comptabilisation (106) d'un nombre B de pixels y se trouvant à l'extérieur du cercle ayant une intensité qui est supérieure au seuil d'intensité de pixel ;
- le calcul (107) d'un rapport entre A et B ;
- pour chacune des images numériques sous-échantillonnées, le maintien (108) de rapports qui sont supérieurs à un paramètre p, le redimensionnement des images numériques sous-échantillonnées à la dimension d'origine, et l'agrégation à chaque position de pixel des rapports maintenus ; et
- la création (110) d'un premier masque d'emplacements d'artéfacts en associant un emplacement d'artéfact à chaque rapport maintenu agrégé qui excède un paramètre τ.

2. Procédé selon la revendication 1 dans lequel le paramètre r ∈ [0,1, 5].

3. Procédé selon la revendication 1 ou 2, dans lequel le paramètre p ∈ [0,1, 0,8].

4. Procédé selon l'une quelconque des revendications 1 à 3, dans lequel le paramètre τ ∈ [0,2, 0,7].

5. Procédé selon l'une quelconque des revendications 1 à 4, comprenant en outre pour chaque emplacement d'artéfact dans le premier masque :

- l'extraction (201) à partir des N images numériques acquises d'une pile de sous-fenêtres qui contiennent entièrement l'emplacement de l'artéfact ;
- pour chaque sous-fenêtre dans la pile extraite, le calcul (202) d'un seuil d'intensité moyenne, et la binarisation de la sous-fenêtre en utilisant le seuil d'intensité moyenne ;
- pour la pile extraite :

- le calcul (203) d'un agrégat pondéré de sous-fenêtres binarisées de la pile extraite, en associant un poids qui est inversement proportionnel à la variance de chaque sous-fenêtre binarisée ;
- le post-traitement de l'agrégat pondéré de sous-fenêtres binarisées de la pile extraite en atténuant (204) les valeurs qui s'éloignent du centre des sous-fenêtres binarisées, et dont les valeurs sont différentes des valeurs au centre des sous-fenêtres binarisées ;
- la binarisation (205) de l'agrégat pondéré post-traité de sous-fenêtres binarisées via le procédé d'Otsu ; et
- le remplacement (206) de l'emplacement d'artéfact dans le premier masque par l'agrégat pondéré post-traité binarisé de sous-fenêtres binarisées pour créer un emplacement d'artéfact sur un second masque d'emplacements d'artéfact.

6. Procédé selon la revendication 5, comprenant également :

- l'acquisition d'une nouvelle image numérique à travers le capteur ;
- le calcul (401) d'un gradient affiné de la nouvelle image numérique en atténuant l'amplitude autour des emplacements d'artéfacts dans le second masque ayant une grande variabilité ;
- pour chaque emplacement d'artéfact dans le second masque, la délimitation (402) d'une fenêtre de recherche autour de l'emplacement d'artéfact, et pour chaque fenêtre de recherche délimitée :

- la délimitation de deuxièmes patchs sous la forme d'ensembles de pixels entièrement inclus dans la fenêtre de recherche délimitée, et qui sont au moins partiellement masqués par l'emplacement de l'artéfact ;
- la délimitation de troisièmes patchs sous la forme d'ensembles de pixels entièrement inclus dans la fenêtre de recherche délimitée, et qui ne sont pas masqués par l'emplacement de l'artéfact ;
- le calcul (403) de distances entre toutes les paires de l'un des deuxièmes patchs avec l'un des troisièmes patchs ;
- la sélection (404) d'un meilleur troisième patch dans l'image numérique en tant que troisième patch parmi toutes les paires, ayant la distance calculée la plus courte ; et
- la mise à jour (405) de la nouvelle image numérique en remplaçant le deuxième patch, par le meilleur troisième patch.

7. Procédé selon la revendication 6 dans lequel les distances sont une mesure de similarité affectée par la variance de l'emplacement de l'artéfact.

**8.** Procédé selon la revendication 6 ou 7, dans lequel la mise à jour de la nouvelle image numérique comprend le remplacement d'une partie centrale uniquement du deuxième patch, par une partie centrale du meilleur troisième patch.

**9.** Système exécutant des instructions de programme informatique pour mettre en œuvre le procédé selon l'une quelconque des revendications 1 à 8.

**10.** Support lisible par ordinateur pour stocker des instructions pour exécuter le procédé selon l'une quelconque des revendications 1 à 8.

**11.** Appareil photo ayant au moins deux modes alternatifs, comportant un mode de détection de poussière, et un mode de prise de vue normal, comprenant un système informatique configuré pour exécuter des instructions pour :

- en mode détection de poussière :
- permettre à un utilisateur de prendre (602) un ensemble de N premières images avec l'appareil photo ;
- traiter (603) l'ensemble des N premières images selon le procédé des revendications 1 et 5 ; et
- stocker (604) dans la caméra un second masque d'emplacements d'artéfacts ;
- en mode de prise de vue normal :

- permettre à l'utilisateur de prendre (605) une seconde image avec la caméra ; et
- permettre (606) de supprimer l'artéfact de la seconde image, en :
- si le second masque d'emplacements d'artéfacts est stocké dans la caméra (607), le traitement (609) de la seconde image conformément au procédé selon l'une quelconque des revendications 6 à 8, et le stockage (610) d'une version sans artéfact de la seconde image dans l'appareil photo ; et
- si le second masque d'emplacements d'artéfacts n'est pas stocké dans l'appareil photo (607), le fait de permettre à l'utilisateur de prendre (602) un ensemble de N premières images avec l'appareil photo, le traitement (603) de l'ensemble de N premières images conformément au procédé selon les revendications 1 et 5, et le stockage (604) dans la caméra d'un second masque final d'emplacements d'artéfacts ; et le traitement (609) de la seconde image conformément au procédé selon l'une quelconque des revendications 6 à 8, et le stockage (610) d'une version sans artéfact de la seconde image dans la caméra.

| Acquire a set of N images | 101 |

↓

| Resize each image to M dimensions | 102 |

↓

| For each pixel x of each image in each dimension: delineate a patch of pixels y centered around pixel x | 103 |

↓

| For each patch: define a pixel intensity threshold that separates background from dust | 104 |

↓

| For each patch: count the number A of pixels y which intensities are below the intensity threshold and lie inside a circle of radius r immersed in the patch | 105 |

↓

| For each patch: count the number B of pixels y which intensities are above the intensity threshold and lie outside a circle of radius r immersed in the patch | 106 |

↓

| For each patch: calculate the ratio between pixel counts A/B | 107 |

↓

| For each image: retain ratios higher than $\rho$, and aggregate at relative positions the retained ratios through all M dimensions of the image | 108 |

↓

| Further aggregate for all N images the aggregated retained ratios | 109 |

↓

| Create first mask of artifact locations by associating an artifact location to further aggregated retained ratios that exceed $\tau$ | 110 |

Figure 1

For an artifact location in the first mask of artifact locations: extract a stack of subwindows that fully contain the artifact location in the set of N images — 201

For each subwindow of the extracted stack: calculate a threshold as the average intensity and binarize the subwindow — 202

Calculate a weighted aggregate of the binarized subwindows of the extracted stack — 203

Post-process the weighted aggregate by attenuating values of pixels with dissimilar magnitudes — 204

Binarize the post-processed weighted aggregate via Otsu's method — 205

Replace the artifact location in the first mask with the binarized post-processed weighted aggregate to create an artifact location on a second mask of artifact locations — 206

Repeat steps 201-206 for all artifact locations in the first mask of artifact locations, until the second mask of artifact locations is finalized — 207

Figure 2

EP 3 839 877 B1

Figure 3

EP 3 839 877 B1

```
┌──────────────────────────────────────────────────────────────┐
│  Calculate refined gradient of an image by attenuating         │ ──── 401
│  magnitude around artifact location regions with large variability │
└──────────────────────────────────────────────────────────────┘
                              ↓
┌──────────────────────────────────────────────────────────────┐
│  For an artifact location in the second mask, delineate a search │ ──── 402
│  window centered around the artifact location                  │
└──────────────────────────────────────────────────────────────┘
                              ↓
┌──────────────────────────────────────────────────────────────┐
│  Calculate distances between all pairs within the search window, │ ──── 403
│  of an at least partially masked patch, with a fully clear patch │
└──────────────────────────────────────────────────────────────┘
                              ↓
┌──────────────────────────────────────────────────────────────┐
│  Select the best clear patch as the one with the shortest distance │ ──── 404
└──────────────────────────────────────────────────────────────┘
                              ↓
┌──────────────────────────────────────────────────────────────┐
│  Update the image with the new inpainted region, by replacing  │ ──── 405
│  the at least partially masked patch, with the best clear patch, │
│  and update the second mask                                    │
└──────────────────────────────────────────────────────────────┘
                              ↓
┌──────────────────────────────────────────────────────────────┐
│  Repeat steps 402 to 405 for all artifact locations in the second │ ──── 406
│  mask, until image is artifact-free                            │
└──────────────────────────────────────────────────────────────┘
```

Figure 4

Figure 5

EP 3 839 877 B1

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Digital Single Lens Reflex Camera Identifcation From Traces of Sensor Dust. *IEEE Transactions on information forensics and security,* 01 September 2008, vol. 3 (3), 539-552

- Video++, a modern image and video processing c++ framework. Proc. 2014 Conference on Design and Architectures for Signal and Image Processing (DASIP). IEEE, 2014, 1-6